# EUROPÄISCHE PATENTSCHRIFT

(11) **EP 0 878 894 B1**
(45) Veröffentlichungstag und Bekanntmachung des Hinweises auf die Patenterteilung: **14.11.2001**
(21) Anmeldenummer: 98810292.7
(22) Anmeldetag: 07.04.1998
(51) Int. Cl.: H02K 3/34, H02K 3/40

(54) **Statorwicklungsisolierung**
Insulation of a stator winding
Isolation d'un enroulement statorique

(30) Priorität: 16.05.1997 DE 19720555
(43) Veröffentlichungstag der Anmeldung: 18.11.1998
(73) Patentinhaber: ABB RESEARCH LTD., 8050 Zürich (CH)
(72) Erfinder: Baumann, Thomas, Dr., 5430 Wettingen (CH); Oesterheld, Jörg, Dr., 5442 Fislisbach (CH); Schuler, Roland, 5430 Wettingen (CH)
(74) Vertreter: Weibel, Beat

(56) Entgegenhaltungen:
- DE-A- 2 115 336
- GB-A- 2 019 778
- US-A- 5 300 844

## Beschreibung

### TECHNISCHES GEBIET

Die vorliegende Erfindung bezieht sich auf das Gebiet lsolationstechnik für Wicklungen elektrischer Maschinen. Bei der Erfindung wird ausgegangen von einer Statorwicklungsisolierung nach dem Oberbegriff von Patentanspruch 1.

Eine Statorwicklungsisolierung der eingangs genannten Art umfasst ein Glimmerband mit mindestens einem schichtförmigen Träger und einer auf mindestens einer Fläche des Trägers mit Hilfe eines Bindemittels befestigten Glimmerschicht. Eine derartige Statorwicklungsisolierung findet bevorzugt Anwendung bei Wicklungen elektrischer Maschinen für hohe Leistungen und Ausnützung.

### TECHNOLOGISCHER HINTERGRUND UND STAND DER TECHNIK

Mit dem Oberbegriff nimmt die Erfindung auf einen Stand der Technik von Wicklungsisolierungen Bezug, wie er etwa in H.Sequenz: Herstellung elektrischer Wicklungen, Springer Verlag, 1973, insbesondere Seiten 62 und 63 beschrieben ist. Dabei umfassen derartige Wicklungsisolierungen Glimmerbänder, die Faserfeststoffbahnen enthalten, wie Papier, Seide oder Glastextilgewebe, auf welche eine oder mehrere Lagen Spaltglimmer oder Glimmerpapier mit einem flexiblen Bindemittel aufgeklebt sind. Die Isoliereigenschaften einer aus solchen Glimmerbändern aufgebauten Wicklungsisolierung werden primär vom dielektrisch hochwertigen Glimmer als auch von den dielektrisch weniger hochwertigen Werkstoffen des Trägers und des Binde- respektive lmprägniermittels bestimmt.

Bei der Isolierung der Statorwicklungsleiter elektrischer Maschinen gegen das geerdete Blechpaket kommt es entscheidend auf die elektrischen und mechanischen Eigenschaften der Hauptisolation an. Bei Nennspannungen von einigen 100 V bis zu 30000 V variiert die Dicke der Hauptisolation bei einer Beanspruchung von etwa 2 kV/mm im Bereich von 0.5 bis 8 mm. Hinzu kommen die hohen Anforderung an die Isolierung, die aus der thermischen Beanspruchung und bei Maschinen mit grossen Statoreisenlängen aus thermomechanischen Dehnungskräften in der Längsrichtung der Nut resultieren.

### DARSTELLUNG DER ERFINDUNG

Der Erfindung, wie sie im Patentanspruch 1 definiert ist, liegt die Aufgabe zugrunde, eine Statorwicklungsisolierung der eingangs genannten Art zu schaffen, welche gegenüber einer Statorwicklungsisolierung nach dem Stand der Technik verbesserte dielektrische und thermische Eigenschaften aufweist.

Erfindungsgemäss wird die Aufgabe durch die Merkmale des ersten Anspruchs gelöst.

Der Kern der Erfindung ist im wesentlichen darin zu sehen, dass in der Statorwicklungsisolierung schichfförmige Träger in Form von Gewebestrukturen Verwendung finden, die ein Volumenverhältnis von Längsfäden zu Querfäden von mindestens 2.5 : 1 aufweisen, wobei diese Träger mit Feinglimmer hoher Packungsdichte versehen sind und das Gewichtsverhältnis Feinglimmer zu Trägermaterial im so aufgebauten Glimmerband gleich oder grösser 6 : 1 ist, wodurch eine kompakte lsolierungsstruktur ermöglicht wird, die bei geringerer Dicke eine mindestens gleiche elektrische Festigkeit wie bekannte Glimmerbänder aus dem Stand der Technik ergibt und zusätzlich eine wesentlich höhere Wärmeleitfähigkeit aufweisen.

Die Vorteile der Erfindung sind unter anderem darin zu sehen, dass nach einer Imprägnierung des erfindungsgemässen Glimmerbandes mit einem Harz, der Anteil des elektrisch und thermisch minderwertigen Binderharzes sowie dem Glasgewebeanteil gegenüber dem hochwertigen Feinglimmeranteil entscheidend reduziert wird.

### KURZE BESCHREIBUNG DER ZEICHNUNG

Die Erfindung wird nachstehend anhand eines Ausführungsbeispiels näher erläutert. In der Zeichnung zeigt:
- Fig.1: einen Schnitt durch einen mit einer Hauptisolierung versehenen Leiterstab einer elektrischen Maschine;
- Fig.2: einen stark vergrösserten Ausschnitt aus Fig.1, welcher eine Lage eines Glimmerbandes der Hauptisolierung zeigt.

Es sind nur die für das Verständnis der Erfindung wesentlichen Elemente schematisch gezeigt.

### WEG ZUR AUSFÜHRUNG DER ERFINDUNG

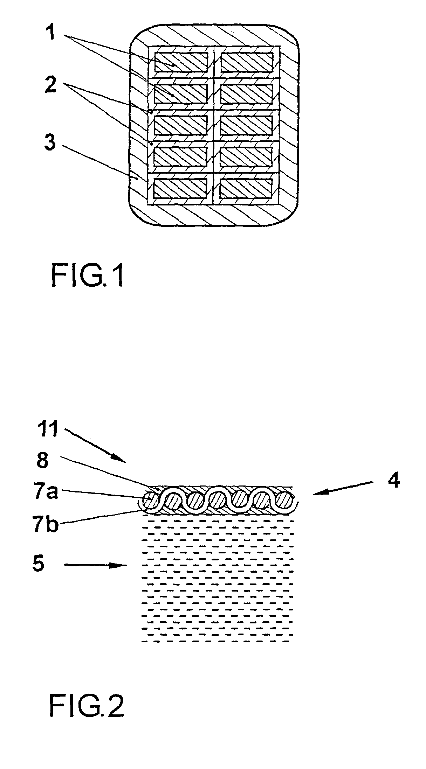

Gemäss Fig.1 besteht ein Leiterstab einer elektrischen Maschine aus einer Vielzahl gegeneinander isolierter Teilleiter 1, die jeweils mit einer Teilleiter- oder Windungsisolation 2 versehen sind. Die zu einem Leiterbündel zusammengefassten Teilleiter 1 sind von einer Hauptisolierung umgeben.

Im stark vergrösserten Ausschnitt gemäss Fig.2 ist der schichtweise Aufbau eines Glimmerbandes der Hauptisolierung 3 zu erkennen. Hier ist vereinfachend lediglich eine Lage der Hauptisolierung 3 dargestellt, die aus zwei Schichten besteht, einer Glimmerpapierschicht 5 und einer anorganischen Gewebeschicht 4, die hier als Glasgewebeschicht ausgeführt ist. Die Maschen des Glasgewebes 4 mit Längsfäden 7a und Querfäden 7b, d.h. der Raum zwischen benachbarten Glasfäden des Glasgewebes 4 ist vollständig von einem Harz, vorzugsweise Epoxy-Harz ausgefüllt, wobei von besonderem Vorteil ist, wenn das Glasgewebe thermisch entschlichtet wurde. Um den Anteil des dielektrisch und thermisch schwächeren Epoxy-Harzes in der Glasgewebeschicht 4 möglichst klein zu halten ist erfindungsgemäss das Volumenverhältnis der Längsfäden 7a zu den Querfäden 7b grösser oder gleich 2.5 : 1. Hierdurch wird eine Gewebestruktur erzielt, die einerseits möglichst kleine Maschen aufweist, die mit Harz ausgefüllt werden, und anderseits ausreichend fest ist für die Herstellung und Weiterverarbeitung eines daraus gefertigten Glimmerbandes 11. Das genannte Volumenverhältnis Längsfäden 7a zu Querfäden 7b von 2.5 : 1 erhöht den Glasgehalt gegenüber dem Harzanteil in der Gewebeschicht 4 nach einer Tränkung im Vergleich zu herkömmlichen Glimmerbändern um etwa 25%. Da das Glasgewebe selbst eine gegenüber dem Epoxy-Harz vergleichsweise gute Wärmeleitfähigkeit aufweist, erhöht sich somit entsprechend auch die Wärmeleitfähigkeit der mit Harz getränkten und ausgehärteten Gewebeschicht 4.

Dem Erfindungsgedanken entsprechend zeigt das Glimmerband 11 besonders gute dielektrische Eigenschaften, wenn das Gewichtsverhältnis Glimmergehalt zu Glasgewebegehalt 6 : 1 beträgt oder grösser ist. Besonders vorteilhaft erweist sich dabei der Einsatz von thermisch aufgeschlossenem Feinglimmer, womit sich der Harzanteil in der getränkten und ausgehärteten Glimmerschicht 5 um etwa 20% reduziert. Dabei stellt sich ein Gewichtsverhältnis vom Feinglimmeranteil zum Harzanteil von etwa 6 : 1 ein. Diese Massnahme erhöht entsprechend die Wärmeleitfähigkeit des Glimmerbandes 11, da Glimmer gegenüber Harz vergleichsweise gut wärmeleitfähig ist.

Wird die Gewebeschicht 4 vor der Beschichtung mit dem Glimmerpapier 5 mit einer thermisch hochwertigen Appretur versehen, wie beispielsweise Aminosilan, so ist die erfindungsgemässe Isolierung mit einem herkömmlichen Epoxidharz als Bindemittel thermisch stabil und einsetzbar bis zur thermischen Klasse H (180°C).

Eine erfindungsgemässe Statorisolierung mit einem Glimmerband 11 weist gegenüber herkömmlichen Isolierungen eine bis zu 50 % bessere Wärmeleitfähigkeit bis etwa 0.4 W/mK auf. Hinzu kommt das bessere dielektrische Verhalten bei geringerer Dicke durch den erhöhten Glimmergehalt. Unter Verwendung eines derartigen Glimmerbandes 11 in einer Hauptisolierung 3 sind somit die folgenden Vorteile zu verzeichnen:
- Die Hauptisolierung 3 ist bei besserem dielektrischem Verhalten dünner und thermisch besser leitend. Die thermisch limitierte Grenzleistung kann aufgrund besserer Kühlmöglichkeiten der Wicklungsstäbe erhöht werden.
- Der Nutfüllfaktor für in Statornuten eingelegte Wicklungsstäbe erhöht sich, was die Verluste reduziert.
- Für gleiche elektrische Leistungen können die elektrischen Maschinen kleiner gebaut werden.

Die Erfindung, wie sie beschrieben ist, reduziert sich allerdings nicht auf das dargestellte Ausführungsbeispiel. So ist bespielsweise auch denkbar, anstelle des Glasgewebes 4 ein Mischgewebe einzusetzen mit Längsfäden 7a aus Glasfäden und Querfäden 7b aus Kunststoff-, Keramik- oder Aluminiumoxidfasern.

### BEZUGSZEICHENLISTE

- 1: Teilleiter
- 2: Teilleiterisolation
- 3: Hauptisolation
- 4: schichtförmiger Träger
- 5: Glimmerpapierschicht
- 7a: Längsfäden
- 7b: Querfäden
- 8: Harz

## Patentansprüche

1. Statorwicklungsisolierung umfassend ein Glimmerband (11) mit mindestens einem schichtförmigen Träger (4), der aus Längsfäden (7a) und Querfäden (7b) aufgebaut ist, und einer auf mindestens einer Fläche des Trägers (4) mit Hilfe eines Bindemittels befestigten Glimmer enthaltende Schicht (5),
**dadurch gekennzeichnet,**
**dass** in dem schichtförmigen Träger (4) das Volumenverhältnis der Längsfäden (7a) zu den Querfäden (7b) grösser oder gleich 2.5 1 ist, und
**dass** der Glimmer in der Glimmer enthaltenden Schicht (5) Feinglimmer hoher Packungsdichte ist, wobei das Gewichtsverhältnis des Feinglimmers zum schichtförmigen Träger (4) im Glimmerband (11) grösser oder gleich 6 : 1 ist.

2. Statorwicklungsisolierung nach Anspruch 1,
**dadurch gekennzeichnet, dass** der schichfförmige Träger (4) aus einem anorganischen Gewebe, insbesondere Glasgewebe, oder einem Mischgewebe mit Längsfäden (7a) aus anorganischen Fasern und Querfäden (7b) aus Kunststoffasern besteht.

3. Statorwicklungsisolierung nach Anspruch 1 oder 2, **dadurch gekennzeichnet, dass** der schichtförmige Träger (4) mit einer thermisch hochwertigen Appretur versehen ist.

## Claims

1. Stator winding insulation comprising a mica band (11) with at least one layer-like carrier (4), which is composed of longitudinal threads (7a) and transverse threads (7b), and with a mica-containing layer (5) fixed to at least one face of the carrier (4) with the aid of a binder, **characterized in that**, in the layer-like carrier (4), the volume ratio of the longitudinal threads (7a) to the transverse threads (7b) is greater than or equal to 2.5 : 1, and **in that** the mica in the mica-containing layer (5) is fine mica having a high packing density, the weight ratio of the fine mica to the layer-like carrier (4) in the mica band (11) being greater than or equal to 6 : 1.

2. Stator winding insulation according to Claim 1, **characterized in that** the layer-like carrier (4) is composed of an inorganic fabric, in particular glass fabric, or of a mixed fabric with longitudinal threads (7a) made from inorganic fibres and transverse threads (7b) made from synthetic fibres.

3. Stator winding insulation according to Claim 1 or 2, **characterized in that** the layer-like carrier (4) is provided with a thermally high-grade finish.

## Revendications

1. Isolation d'enroulement de stator comprenant un ruban de mica (11) ayant au moins un support en forme de couche (4), composé de fils longitudinaux (7a) et de fils transversaux (7b), et une couche contenant du mica (5) fixée sur au moins une face du support (4) à l'aide d'un liant, **caractérisée en ce que** le rapport volumique entre les fils longitudinaux (7a) et les fils transversaux (7b) dans le support en forme de couche (4) est égal ou supérieur à 2,5:1 et que le mica dans la couche contenant du mica (5) est du mica mince à haute densité de tassement, le rapport de poids entre le mica mince et le support (4) dans le ruban de mica (11) étant égal ou supérieur à 6:1.

2. Isolation d'enroulement de stator selon la revendication 1, **caractérisée en ce que** le support en forme de couche (4) se compose d'un tissu anorganique, plus particulièrement du tissu de fibres de verre ou un tissu composite dont les fils longitudinaux (7a) sont en fibres anorganiques et les fils transversaux (7b) sont en fibres de plastique.

3. Isolation d'enroulement de stator selon la revendication 1 ou 2, **caractérisée en ce que** le support en forme de couche (4) est muni d'un apprêt ayant de bonnes propriétés thermiques.
